# EUROPEAN PATENT APPLICATION

(11) **EP 2 762 610 A1**
(43) Date of publication of application: **06.08.2014**
(21) Application number: 12837085.5
(22) Date of filing: 02.08.2012
(51) Int. Cl.: C23C 26/00, C08G 61/12, C08G 73/00, H01B 1/12, H01G 9/028, C07F 1/12

(54) **ORGANIC-INORGANIC COMPOSITE AND METHOD FOR MANUFACTURING SAME**

(30) Priority: 27.09.2011 JP 2011210082
(71) Applicant: Hitachi, Ltd., Tokyo 100-8280 (JP)
(72) Inventor: OYAMA Taku, Chiyoda-ku Tokyo 100-8280 (JP); AMOU Satoru, Chiyoda-ku Tokyo 100-8280 (JP); KUWABARA Kosuke, Chiyoda-ku Tokyo 100-8280 (JP); MURAKI Takahito, Chiyoda-ku Tokyo 100-8280 (JP)
(74) Representative: Beetz & Partner
(86) International application number: PCT/JP2012/069685
(87) International publication number: WO 2013/046917

(57) **Abstract**

The purpose of the present invention is to provide composite particulates and a method for manufacturing the composite particulates, the particulates including an organic substance and a metal having exceptional adhesiveness to a substrate, allowing easier control over metallic particle dispersion, facilitating control over electrical conductivity, and exhibiting high electroconductivity. The metallic particulates are characterized in that they have a thiol compound coordinated on the surfaces thereof, they are adsorbed onto a substrate with a silane compound interposed therebetween, and the thiol compound on the surfaces is subjected to oxidative polymerization, thereby yielding a structure in which an electroconductive polymer is coordinate-bonded to the surface of the metallic particulates.

## Description

### Technical Field

The present invention relates to composite particulates comprising a metal and an organic substance, and to a method for manufacturing the same.

### Background Art

Conductive materials such as metallic particulates and electroconductive polymers are important materials which have hitherto been widely used in various electronic apparatus fields and been under application and research. Examples of the field to which the metallic particulates are applied include nano-level wiring materials, light wavelength cutting filters, DNA sequencers, and conductive adhesive materials. On the other hand, the conductive polymers have been used as antistatic materials for circuit boards or photographic films, as solid electrolyte materials for capacitors, and as pressure-sensitive materials capable of sensing a change in electric resistance under a pressure applied thereto in touch panels.

In such applications to electronic apparatus fields, metallic particulates or a conductive polymer may be fixed on a substrate, or metallic particulates may be dispersed in an organic substance.

For instance, Patent Document 1 discloses materials in which gold ultrafine particles modified with a thiol compound having an amino group, a thiol compound having a hydroxyl group or a thiol compound having a carboxyl group are mixed with bases or acids, followed by subjecting the resultant gold ultrafine particles to a polycondensation reaction or a polyaddition reaction so as to interconnect the particles. There have been made trials to attain materials capable of being utilized for electrical or optical devices, by use of such gold ultrafine particle reaction agents.

### Prior Art Documents

### Patent Documents

Patent Document 1: JP-1999-60581-A
Patent Document 2: Japanese Patent No. 3276922

### Summary of the Invention

### Problem to be Solved by the Invention

The metallic particulates to be used for nano-level wiring materials, light wavelength cutting filters, DNA sequencers or conductive adhesive materials should show electroconductivity, small particle diameters, properties for control of the distance between metallic particles, and/or adsorptiveness to substrates, as well as dispersibility into organic substances. The conductive polymers to be used as antistatic materials for circuit boards or photographic films, as solid electrolyte materials for capacitors, or as pressure-sensitive materials capable of sensing a change in electric resistance under a pressure applied thereto in tough panels should show lightness in weight, flexibility, processability, ion permeability, and/or transparency.

In the case of the nano-level wiring materials, the electrically conductive metallic particulates are often used after their surfaces are coated with a thiol compound or a silane coupling agent so that they can be arrayed in an ordered manner. Here, the thiol compound and the silane coupling agent are insulating materials; therefore, conductivity is more lowered as a denser coating is adopted for enhancing the orderedness of array of the particulates on the substrate and/or the adsorptiveness of the particulates onto the substrate.

In the case of the light wavelength cutting filters, a sufficiently thin metallic film should be formed on a substrate such as a glass, for achieving resonance with a specific incident light wavelength. Here, in order to form the thin metallic film, metallic particulates should be vapor deposited, which needs massive equipment, thereby leading to a rise in production cost.

In the case of the DNA sequencers, the distance between electrically conductive metallic particulates should be equal to the base length of the DNA to be detected. For this purpose, the metallic particulates are often used after their surfaces are coated with a thiol compound having a monomolecular layer to adjust the distance between the particles. However, this would lead to a lowering in inter-particle conductivity and hence to a lowering in DNA detection efficiency, since the thiol compound is an insulator.

In the case of the conductive adhesive materials, a paste prepared by dispersing organic substance-coated metallic particles in an organic solvent is often used, in order to attain good adhesion to and secure contact with a substrate comprised of a metal or metallic oxide and to obtain high electroconductivity. However, in order to obtain good adhesiveness and secure contact properties, heating and pressurization may be needed, leading to a raised production cost.

On the other hand, in the case of the antistatic materials for circuit boards or photographic films, a material obtained by loading a polymer (which is an insulator) with a conductive filler such as a metal or carbon material is often used, in order to control the difference in electrification level between the antistatic material and the objective material to be protected. However, control of the conductivity is difficult to achieve, since conductivity is sharply increased when the loading amount of the filler exceeds a threshold.

In the solid electrolyte materials for capacitors, a conductive polymer such as polyaniline and polydioxythiophene is often used, so as to obtain secure contact between the dielectric and the electrode. However, conductive polymers are lower than metals in conductivity, and, therefore, further enhancement in conductivity should be made for lowering the impedance in high-frequency regions.

In the case of the pressure-sensitive materials capable of sensing a change in electric resistance under a pressure applied thereto, a thin film formed by vapor deposition of metallic particles such as indium tin oxide onto a polyester film material is often used. Indium tin oxide, however, is low in bending resistance and, in order to produce a thin film thereof, a high-cost step such as vacuum evaporation may be needed. While researches on conductive polymers such as polythiophene or polyaniline for use as a substituent material have been made, the conductive polymers are poor in conductivity.

Thus, in relation to uses of composite particulates comprised of a metal and an organic substance, there is a need for a material showing high electroconductivity, facilitating control of electric conductivity, allowing easier control of metallic particle dispersion, and being excellent in adhesiveness to substrates.

While Patent Document 1 is effective in terms of the gold particles excellent in stability and miscibility with other components, the document does not contain sufficient investigations from the viewpoints of high electroconductivity, easiness of control of electric conductivity, control of metallic particle dispersion, and adhesiveness to substrates.

### Means for Solving the Problem

Metallic particulates having a thiol compound coordinated on surfaces thereof are characterized in that they are adsorbed onto a substrate with a silane compound interposed therebetween, and the thiol compound on the surfaces is subjected to oxidative polymerization, thereby yielding a structure in which an electroconductive polymer is coordinate-bonded to the surfaces of the metallic particulates.

### Effect of the Invention

It is possible to provide an organic-inorganic composite comprised of a metal and an organic substance, allowing easy control of electric conductivity and easy control of metallic particle dispersion, and exhibiting excellent adhesiveness to a substrate.

Further objects, features and advantages of the present invention will be apparent from the following description of working examples of the invention, reference being made to the accompanying drawings.

### Brief Description of the Drawings

FIG. 1 shows SEM images of a polyaniline-gold particulate composite.
FIG. 2 shows an SEM image of a polyaniline-butanethiol-modified gold particulate composite.
FIG. 3 shows an SEM image of a section of a polyaniline-butanethiol-modified gold particulate composite.
FIG. 4 shows a sectional configuration drawing of a capacitor.
FIG. 5 is an enlarged drawing of an adhesion surface of an organic-inorganic composite shown in FIG. 4.

### Mode for Carrying Out the Invention

The present invention provides metallic particulates having a thiol compound coordinated on surfaces thereof, characterized in that the metallic particulates are adsorbed onto a substrate with a silane compound interposed therebetween, and the thiol compound is subjected to oxidative polymerization, thereby yielding a structure in which an electroconductive polymer is coordinate-bonded to the surfaces of the metallic particulates.

Besides, the metallic particulates in this instance are desirably prepared by putting any of citric acid, sodium citrate, hydroxylamine hydrochloride, acetylene gas, acetone, oxalic acid, hexadecyltrimethylammonium bromide, L-ascorbic acid, sodium borohydride, lithium borohydride, and stearyltrimethylammonium chloride into an aqueous, toluene or alcoholic solution of a metal complex of gold chloride, silver nitrate, copper chloride, copper acetate or the like.

In addition, the particle diameter of the metallic nano-particles prepared in this instance is desirably not more than 100 nm, preferably in the range from 15 to 100 nm.

The thiol compound in this instance is desirably any of 2-aminothiophenol (C₆H₇NS, CAS No. 137-07-5), 4-aminothiophenol (C₆H₇NS, CAS No. 1193-02-8), 2-thiophenethiol (C₄H₄S, CAS No. 7774-74-5), 2-methylthiopnene-3-thiol (C₅H₆S₂, CAS No. 2527-76-6), and 5-methyl-2-thiophenethiol (C₅H₆S₂, CAS No. 3970-28-3). Such specific thiol compounds can easily undergo oxidative polymerization, and the use of these thiol compounds allows organic-inorganic composites having higher electric conductivity to be produced under comparatively simple conditions.

The silane compound in this instance is desirably a methyl ethyl ketone solution of any of trimethoxy (propyl) silane (C₆H₁₆O₃Si, CAS No. 1067-25-0), vinyltrimethoxysilane (C₅H₁₂O₃Si, CAS No. 2768-02-7), 4-(trimethoxysilyl) styrene (C₁₁H₁₆O₃Si, CAS No. 18001-13-3), 3-glycidoxypropyltrimethoxysilane (C₉H₂₀O₅Si, CAS No. 2530-83-8), 3-glycidoxypropylmethyldiethoxysilane (C₁₁H₂₄O₄Si, CAS No. 2897-60-1), 3-glycidoxypropyltriethoxysilane (C₁₂H₂₆O₅Si, CAS No. 2602-34-8), 2-(3,4-epoxyscyclohexyl) ethyltriethoxysilane (C₁₁H₂₂O₄Si, CAS No. 3388-04-3), 3-glycidoxypropylmethyldimethoxysilane (C₉H₂₀O₄Si, CAS No. 65799-45-7), N-2-(aminoethyl)-3-aminopropyltrimethoxysilane (C₈H₂₂N₂O₃Si, CAS No. 1760-24-3), and 3-isocyanatopropyltriethoxysilane (C₁₀H₂₁NO₄Si, CAS No. 24801-88-5). The use of such a specific silane compound makes it possible to produce an organic-inorganic composite having more stable contact properties at the interface between the organic material and the inorganic material.

An oxidant to be used for oxidative polymerization of the thiol compound coating the surfaces of the metallic particles is desirably a 2-methyl-2-propanol solution or aqueous solution of any of ferric chloride, hydrochloric acid, copper sulfate, iron p-toluenesulfonate, and ammonium peroxodisulfate.

A doping agent for imparting electroconductivity to the conductive polymer produced by oxidative polymerization is desirably a solution of any of hydrochloric acid, p-toluenesulfonic acid, carbon tetrachloride, and m-cresol in any of water, alcohol, ether, and chloroform.

Incidentally, the term "coordinated on" and "modified with" in the present invention means coating of the metallic particles with the thiol compound. Specifically, the coordination means coordinate bond, and the modification means any of coordinate bond, covalent bond, and ionic bond.

Incidentally, the expression "with ... interposed therebetween" means a bond (linkage) between the thiol compound and the silane compound; specifically, the expression means any of a coordinate bond, a covalent bond, and an ionic bond.

In the following Examples, observation of the metallic particulates or of the metallic particulates modified with either of the thiol compound and the conductive polymer was carried out in the following manner. The surface of a substrate specimen having adsorbed thereon the metallic particulates or the metallic particulates modified with either of the thiol compound and the conductive polymer was subjected to vapor deposition of platinum thereon by use of Hitachi E-1030. Then, the observation was carried out using a scanning electron microscope Hitachi S-4800 at an acceleration voltage of 10, 3, or 1.5 kV. In observation in the direction of a section of a plate material, the section was embedded in resin, followed by ion milling by use of Hitachi E-3500 at an acceleration voltage of 3 kV, to produce a specimen. Hereafter, the observation by use of the scanning electron microscope will be referred to as SEM observation, and an image obtained by the observation will be referred to as an SEM image.

In the following Examples, the thiol compound on the surfaces of metallic particulates was subjected to oxidative polymerization, and the resulting conductive polymer was confirmed in the following manner. The surfaces of the metallic particulates before and after the oxidative polymerization were observed by a microscopic reflection method using a Fourier transform infrared spectroscopic analyzer FTS-3000MX and a microscopic infrared analyzer UWA600 both produced by DIGLAB Inc. Hereinafter, a spectrum obtained by the infrared spectroscopic analyzer will be referred to as an IR spectrum.

Besides, in the following Examples, electric conductivity was measured in the following manner. A substrate with metallic particulates adsorbed thereon was coated with a silver paste, and the metallic particulates in other areas than the measurement area were removed by use of sandpaper, to obtain a specimen for electric conductivity measurement. The measurement of electric conductivity was carried out by a two-terminal method using LCZ Meter 2322 (produced by NF Electric Instruments) at an AC frequency of 1 kHz. Measurement of the distance between electrodes was carried out using a stereoscopic microscope OPTIHOT (produced by Nikon Corporation).

### EXAMPLE 1

In relation to the preparation of metallic particulates, for example, the preparation of gold particulates, the following operations were carried out. A flask was charged with 95 ml of pure water and 14.2 mg of gold tetrachloride trihydrate produced by Wako Pure Chemical Industries, Ltd., followed by stirring at reflux in an oil bath set to 130°C until the aqueous solution boiled. Thereafter, 5 ml of an aqueous solution containing 1.4 g of citric acid produced by Wako Pure Chemical Industries was put into the aqueous gold complex solution being stirred. After the citric acid was put into the solution and a change in color of the solution from yellow to reddish purple was confirmed, heating and stirring were continued for one hour, to prepare an aqueous gold colloidal solution. After one hour, the flask was removed from the oil bath, and was let cool at room temperature. The resulting solution was stored in a cold storage, to be used later as a sample of gold particulates.

In relation to a surface treatment of a substrate with a silane compound, the substrate was wiped with methanol produced by Wako Pure Chemical Industries, followed by plasma cleaning by use of an atmospheric-pressure plasma treatment device FG5001 produced by Nihon Plasmatreat Inc. Then, the substrate was immersed for one hour in a 0.1 wt% solution of trimethoxy(propyl)silane produced by Tokyo Chemical Industry Co., Ltd., p-styryltrimethoxysilane produced by Shin-Etsu Chemical Co., Ltd., 3-(2-aminoethylamino)propyltrimethoxysilane produced by Tokyo Chemical Industry, 3-glycidoxypropyltrimethoxysilane produced by Shin-Etsu Chemical, 3-glycidoxypropylmethyldiethoxysilane produced by Shin-Etsu Chemical, 3-glycidoxypropyltriethoxysilane produced by Shin-Etsu Chemical, 2-(3,4-epoxycyclohexyl)ethyltriethoxysilane produced by Shin-Etsu Chemical, or 3-glycidoxypropylmethyldimethoxysilane produced by Shin-Etsu Chemical, in methyl ethyl ketone produced by Wako Pure Chemical Industries.

In relation to adsorption of the gold particulates onto the substrate, the substrate was immersed in 22.5 ml of the gold colloidal solution, and the colloidal solution was stirred. Thereafter, 3.1 mmol of 2-aminothiophenol produced by Wako Pure Chemical Industries or 4-aminothiophenol produced by Wako Pure Chemical Industries was put into the colloidal solution, and the resulting solution was stirred until the solution became colorless and transparent. Upon this operation, the substrate surface was colored in gold, and SEM observation thereof revealed adsorption of gold particles about 20-65 nm in diameter onto the substrate.

In relation to oxidative polymerization of 2-aminothiophenol or 4-aminothiophenol coordinated on the surfaces of the gold particulates, 1 mol aqueous hydrochloric acid solution containing 10 mmol of ferric chloride produced by Wako Pure Chemical Industries was added dropwise to the 2-aminothiophnol- or 4-aminothiophenol-modified gold particulates on the substrate. Then, the resulting system was left to stand at room temperature for 8 hours, to cause formation of polyaniline.

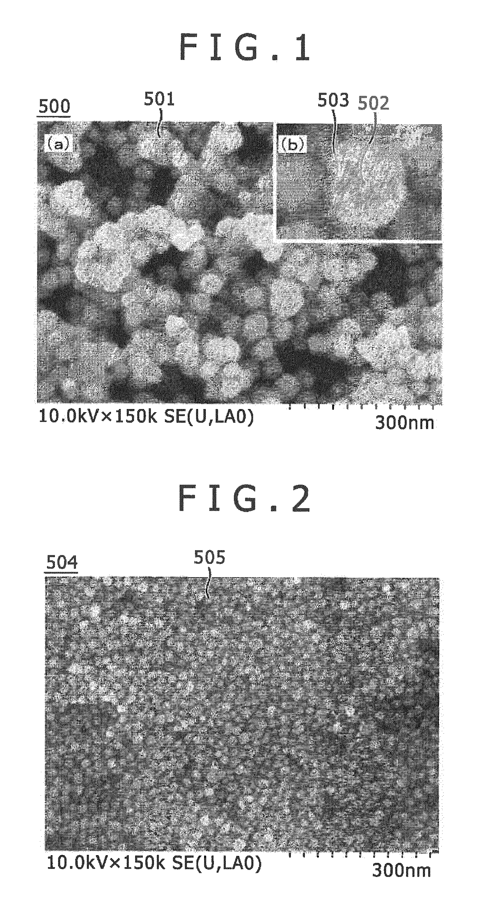

FIG. 1 shows SEM images of the polyaniline-gold particulate composite observed. In an overall image 500(a) of the polyaniline-gold particulate composite, gold particulates 501 can be confirmed. In an enlarged image 500(b) of the polyaniline-gold particulate composite, gold particulates 502 and polyaniline 503 can be confirmed.

By putting the thiol compound into the solution at the time of adsorption of gold particles onto the substrate and polymerizing the thiol compound after the adsorption of gold particles onto the substrate, it is possible to prevent aggregation of the metallic particles and to obtain a good dispersed state. In addition, the adsorption operation can be carried out at low cost, without need to use any large-type apparatus. The composite adsorbed onto the substrate is not peeled off even when an adhesive tape is adhered to the surface of the composite and then peeled off; thus, the composite shows good adsorption properties. Especially, a composite obtained by immersion of the substrate in a silane compound having an epoxy group in the molecule thereof, among the above-mentioned silane compounds, exhibited good adsorption properties.

In relation to doping of the polyaniline on the surfaces of the gold particulates, cleaning and doping were conducted using 1 mol aqueous hydrochloric acid solution. Electric conductivity was measured to be 1869 Scm⁻¹. Thus, when the conductive polymer is coordinate-bonded to the metallic particles, a higher electric conductivity can be obtained, as compared with the case of a conductive polymer in the related art and the case of a composite in which a conductive polymer and metallic particles are put in physical contact with each other according to the related art.

The IR spectra of the thiol compound on the surfaces of the gold particulates before and after the oxidative polymerization operation were confirmed. For the 2-aminothiophenol-modified gold particulates, there could be confirmed a peak of benzene ring C=C stretching vibration at 1550 cm⁻¹, a peak of guinoid C-C stretching vibration at 1463 cm⁻¹, a peak of C-N stretching vibration at 1300 cm⁻¹, and a peak of C-N•+ stretching vibration at 1200 cm⁻¹. On the other hand, for the polyaniline-gold particulates, the peak of C-N•+ stretching vibration was found to have disappeared although there could be confirmed the peak of benzene ring C=C stretching vibration, the peak of quinoid C-C stretching vibration, and the peak of C-N stretching vibration.

Besides, in relation to adsorption of gold particulates onto a substrate in the case where two kinds of thiol compounds are used, a substrate was immersed in 22.5 ml of a gold colloidal solution, and the colloidal solution was stirred. Thereafter, 1.5 mmol of butanethiol produced by Wako Pure Chemical Industries and 1.5 mmol of 2-aminothiophenol produced by Wako Pure Chemical Industries were put into the solution, followed by stirring until the solution became colorless and transparent. Upon this operation, the substrate surface was colored in gold, and SEM observation thereof revealed adsorption of gold particles about 15-50 nm in diameter onto the substrate. Thereafter, the above-mentioned oxidative polymerization and doping operation were performed, whereon an electric conductivity of 945 Scm⁻¹ was obtained.

FIG. 2 shows an SEM image as an overall image of the polyaniline-butanethiol-gold particulate composite whose surface was observed. In the overall image 504 of the polyaniline-butanethiol-gold particulate composite, gold particulates 505 can be confirmed.

Thus, by mixing a straight-chain thiol compound at the time of adsorption of the gold particles, it is ensured that the particle diameter of the gold particles is changed, so that the inter-particle distance of the gold particles, the dispersed state of the gold particles, and the electroconductivity can be controlled. In the case of using the organic-inorganic composite according to the present invention as a DNA sequencer, the distance between the gold particles should be controlled in conformity with the length of the DNA to be detected. By mixing a straight-chain thiol compound at the time of adsorption of the gold particles as in the above-mentioned method, it is possible to easily control the distance between the gold particles. In the case of using the organic-inorganic composite according to the present invention as an antistatic material, the electric conductivity of the composite should be controlled, for the purpose of preventing transient electric discharge from occurring upon contact of the composite with an electrified matter. In the organic-inorganic composite according to the present invention, it is possible, by changing the ligand for the metallic particles, to easily control electric conductivity while maintaining a good electric conductivity.

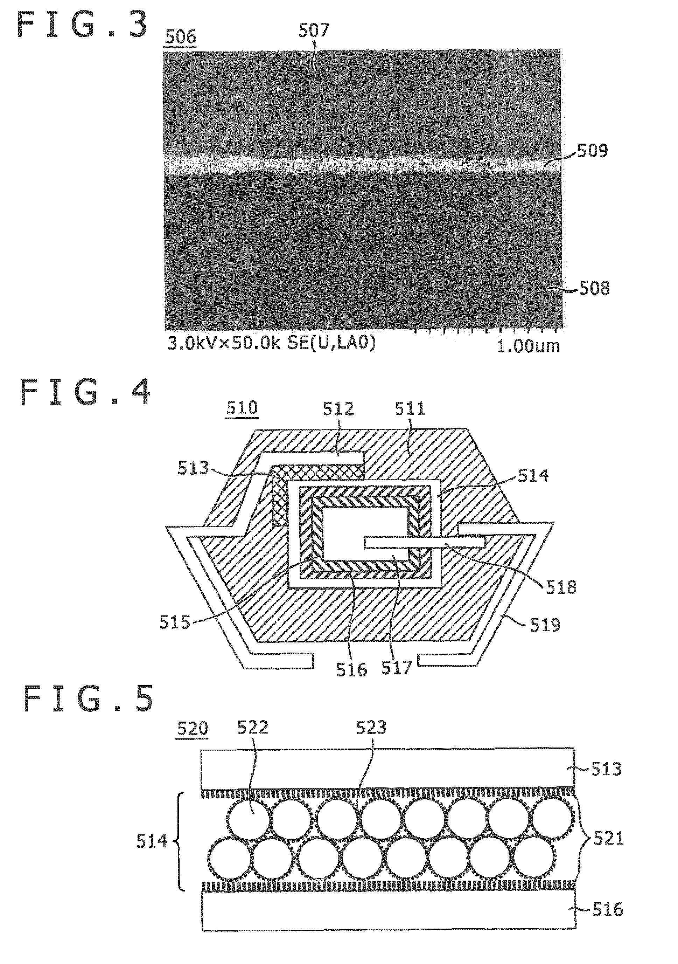

FIG. 3 shows an SEM image of a section of the polyaniline-butanethiol-modified gold particulate composite. In the SEM image 506 of the section of the polyaniline-butanethiol-modified gold particulate composite, there can be confirmed an embedding resin 507, a substrate 508, and gold particles 509. The film thickness of the composite is about 100 nm, which represents a sufficient thinness for exhibiting a resonance effect on specified incident light.

Besides, in relation to adsorption of gold particulates onto a substrate upon change of the thiol compound, the following operations were performed. A substrate was immersed in 22.5 ml of a gold colloidal solution, followed by stirring. Thereafter, 2.6 mmol of 2-thiophenethiol produced by Wako Pure Chemical Industries, 2-methylthiophene-3-thiol produced by Wako Pure Chemical Industries, or 5-methyl-2-thiophenethiol produced by Wako Pure Chemical Industries was put into the solution, followed by stirring until the solution became colorless and transparent. Upon this operation, the substrate surface was colored in gold, and SEM observation thereof revealed adsorption of gold particles about 15-50 nm in diameter onto the substrate.

In relation to oxidative polymerization of 2-thiophenethiol, 2-methylthiophene-3-thiol, or 5-methyl-2-thiophenethiol coordinated on the surfaces of gold particulates, the following operations were conducted. An aqueous solution containing thiophene, p-toluenesulfonic acid, and tert-butyl alcohol in a weight ratio of 1:10:5.5 was added dropwise to gold particulates modified with 2-thiophenethiol, 2-methylthiophene-3-thiol, or 5-methyl-2-thiophenethiol on a substrate, and the resulting system was left to stand at 40°C for one hour, thereby causing formation of polythiophene. Thus, a polymer of a thiol compound of either 2-thienyl or 5-thienyl is coordinated on the surfaces of the metallic particulates.

The electric conductivity of the polythiophene-modified gold particles as above-mentioned was measured to be 1012-1083 Scm⁻¹. Thus, the organic-inorganic composite material according to the present invention has a sufficiently high electric conductivity, even upon a change of the ligand for the metallic particles. In addition, the formation of the above-mentioned polythiophene can be carried out in a shorter time, as compared with the formation of the above-mentioned polyaniline.

### EXAMPLE 2

In relation to the preparation of metallic particulates other than the gold particulates in Example 1, for example, the preparation of silver particulates, the following operations were conducted. To 900 ml of pure water was added 0.9 ml of an aqueous solution containing 0.12 g of silver nitrate produced by Wako Pure Chemical Industries, and 0.1 g of stearyltrimethylammonium chloride produced by Wako Pure Chemical Industries was dissolved in the resulting aqueous solution. To this solution was added 100 ml of an aqueous solution of sodium borohydride produced by Aldrich containing 0.8 g of aqueous sodium hydroxide solution produced by Wako Pure Chemical Industries, and the resulting solution was stirred for three hours, to obtain a yellowish brown aqueous colloidal solution of metallic silver. By using silver particulates for an organic-inorganic composite, materials cost can be lowered.

### EXAMPLE 3

In relation to the preparation of metallic particulates other than the gold particulates in Example 1 and the silver particulates in Example 4, for example, the preparation of copper particulates, the following operations were carried out. In a reaction vessel was placed 50 ml of 1 mol aqueous copper chloride solution produced by Aldrich. Then, a solution prepared by dissolving 4.5 g of Solsperse 24000 (commercial name) produced by Astra Zeneca K.K. in 13.5 g of toluene produced by Wako Pure Chemical Industries was added to the reaction vessel, as protective colloid, followed by mixing under stirring. After sufficient mixing, 50 ml of a 2 mol aqueous lithium borohydride solution produced by Aldrich was added to the mixture, followed by stirring for one hour to effect a reaction. When left to stand, the reaction mixture was separated into a colorless transparent aqueous phase and a deep red organic solvent phase. Only the organic solvent phase was extracted and washed with water, to obtain a vivid red toluene solution of copper colloid. With the copper particulates thus used for an organic-inorganic composite, materials cost can be lowered.

### EXAMPLE 4

FIG. 4 shows a sectional configuration drawing of a capacitor fabricated by use of the polyaniline-gold particulate composite as a solid electrolyte layer, as shown in Example 1. As shown in FIG. 4, in a capacitor section 510, there can be confirmed an armor 511, a cathode terminal 512, a silver paste 513, a solid electrolyte layer 514, a dielectric oxide layer 515, an insulator layer 516, an anode 517, an anode lead 518, and an anode terminal 519.

FIG. 5 shows an enlarged drawing of an adhesion surface of the organic-inorganic composite shown in FIG. 4. As shown in FIG. 5, the solid electrolyte layer 514 comprised of the organic-inorganic composite is adhered to the silver paste 513 and the insulator layer 516. In the organic-inorganic composite adhesion surface 520, there can be confirmed a silane coupling agent 521 provided along each of the silver paste 513 and the insulator layer 516, as well as metallic particulates 522 and a conductive polymer 523. The use of the polyaniline-gold particulate composite allows a capacitor to be produced at a cost comparable to that in the related art. The capacitor had an equivalent circuit resistance of 0.1 Q at a frequency of 100 kHz.

### EXAMPLE 5

As another example of the capacitor fabricated by use of the polyaniline-gold particulate composite as a solid electrolyte layer as shown in Example 4, a capacitor was produced using a polythhiophene-gold particulate composite. The use of the polythiophene-gold particulate composite allowed a capacitor to be produced at a cost comparable to that in the related art, and in a shorter time as compared with the case of using the polyaniline-gold particulate composite. The capacitor obtained had an equivalent circuit resistance of 0.12 Q at a frequency of 100 kHz.

### Comparative Example 1

As a comparative example, an organic-inorganic composite in which a conductive polymer is coating metallic particles but is not coordinated on the metallic particles was fabricated. An aqueous aniline solution was admixed with 200 ml of a 0.03% aqueous gold chloride complex solution, and the admixture was stirred at 65°C for 30 minutes, to obtain an aniline-gold particulate composite in which gold particulates are taken into aniline but aniline and the metallic particulates are not chemically bonded to each other. The electric conductivity of this material was measured to be 3.0×10⁻² Scm⁻¹.

### Comparative Example 2

As a comparative example, an organic-inorganic composite in which a thiol compound is coordinated on metallic particles but is not polymerized was produced. A substrate was immersed in 22.5 ml of a gold colloidal solution, followed by stirring. Thereafter, 3.1 mmol of 2-aminothiophenol produced by Wako Pure Chemical Industries was put into the colloidal solution, and the resulting solution was stirred until it became colorless and transparent, to obtain 2-aminothiophenol-gold particulate composite material. The electric conductivity of this material was measured to be 833 Scm⁻¹.

### Comparative Example 3

As a comparative example, a capacitor was fabricated using polyethylenedioxythiophene as a conductive polymer for forming a solid electrolyte layer. The capacitor had an equivalent circuit resistance of 0.25 Q at a frequency of 100 kHz.

While the above description has been made of Examples, the present invention is not restricted to these Examples, and it is obvious to those skilled in the art that various changes and modifications are possible within the scope of the spirit of the invention and the appended claims.

### Explanation of Reference Signs

- 500(a): Overall image of polyaniline-gold particulate composite
- 500(b): Enlarged image of polyaniline-gold particulate composite
- 501, 502, 505: Gold particulates
- 503: Polyaniline
- 504: Overall image of polyaniline-butanethiol-gold particulate composite
- 506: SEM image of section of polyaniline-butaethiol-modified gold particulate composite
- 507: Embedding resin
- 508: Substrate
- 509: Gold particles
- 510: Section of capacitor
- 511: Armor
- 512: Cathode terminal
- 513: Silver paste
- 514: Solid electrolyte layer
- 515: Dielectric oxide layer
- 516: Insulator layer
- 517: Anode
- 518: Anode lead
- 519: Anode terminal
- 520: Adhesion surface of organic-inorganic composite
- 521: Silane coupling agent
- 522: Gold particulates
- 523: Conductive polymer

## Claims

1. An organic-inorganic composite comprising:
metallic particulates; and
a polymer of a thiol compound selected from among 2- and 4-aminothiophenol and 2- and 5-thienyl thiol compounds, the thiol compound coordinated on surfaces of the metallic particulates.

2. The organic-inorganic composite according to claim 1, comprising
a substrate surface-treated with a silane compound.

3. The organic-inorganic composite according to claim 1 or 2, comprising
a straight-chain thiol compound.

4. A capacitor comprising a solid electrolyte layer including the organic-inorganic composite according to any of claims 1 to 3.

5. A method for manufacturing an organic-inorganic composite, comprising:
immersing a substrate in a solution containing metallic particulates dispersed therein;
putting a thiol compound selected from among 2- and 4-aminothiophenol and 2- and 5-thienyl thiol compounds into the solution and stirring the solution with the thiol compound therein; and
subjecting the thiol compound to oxidative polymerization.

6. The method according to claim 5, comprising
surface-treating the substrate with a silane compound, before immersing the substrate in the solution.

7. The method according to claim 5 or 6,
wherein the silane compound has an epoxy group.

## Amended claims

### Amended claims under Art. 19.1 PCT

**1.** (amended) An organic-inorganic composite comprising:
metallic particulates; and
a polymer of a thiol compound selected from among 2- and 4-aminothiophenol and 2- and 5-thienyl thiol compounds, the thiol compound coordinated on surfaces of the metallic particulates,
wherein the metallic particulates are continuous with each other, with the polymer of the thiol compound interposed therebetween.

**2.** The organic-inorganic composite according to claim 1, comprising
a substrate surface-treated with a silane compound.

**3.** The organic-inorganic composite according to claim 1 or 2, comprising
a straight-chain thiol compound.

**4.** A capacitor comprising a solid electrolyte layer including the organic-inorganic composite according to any of claims 1 to 3.

**5.** (amended) A method for manufacturing an organic-inorganic composite, comprising:
immersing a substrate in a solution containing metallic particulates dispersed therein;
putting a thiol compound selected from among 2- and 4-aminothiophenol and 2- and 5-thienyl thiol compounds into the solution and stirring the solution with the thiol compound therein; and
dropping an acid solution onto the substrate, thereby subjecting the thiol compound to oxidative polymerization.

**6.** The method according to claim 5, comprising
surface-treating the substrate with a silane compound, before immersing the substrate in the solution.

**7.** The method according to claim 5 or 6,
wherein the silane compound has an epoxy group.
